# EUROPÄISCHE PATENTSCHRIFT

(11) **EP 1 625 237 B1**
(45) Veröffentlichungstag und Bekanntmachung des Hinweises auf die Patenterteilung: **27.12.2006**
(21) Anmeldenummer: 04739140.4
(22) Anmeldetag: 06.05.2004
(51) Int. Cl.: C14C 3/22, C08F 283/06

(54) **VERWENDUNG VON COPOLYMERISATEN ALS HILFSMITTEL FÜR DIE LEDERHERSTELLUNG**
USE OF COPOLYMERS AS AUXILIARY AGENTS FOR PRODUCING LEATHER
UTILISATION DE COPOLYMERES SERVANT D'AUXILIAIRES DANS LA FABRICATION DU CUIR

(30) Priorität: 13.05.2003 DE 10321628
(43) Veröffentlichungstag der Anmeldung: 15.02.2006
(73) Patentinhaber: BASF Aktiengesellschaft, 67056 Ludwigshafen (DE)
(72) Erfinder: SCHNEIDER, Tanja, 64625 Bensheim (DE); HÜFFER, Stephan, 67063 Ludwigshafen (DE); BAUM, Pia, 69469 Weinheim (DE); KLÜGLEIN, Matthias, 67071 Ludwigshafen (DE)
(86) Internationale Anmeldenummer: PCT/EP2004/004814
(87) Internationale Veröffentlichungsnummer: WO 2004/101827

(56) Entgegenhaltungen:
- WO-A-02/18526
- WO-A-93/17130
- DE-A- 2 623 692
- DE-A- 19 815 946

## Beschreibung

Die vorliegende Erfindung betrifft die Verwendung von Pfropfcopolymerisaten, die mindestens ein monoethylenisch ungesättigtes Monomer einpolymerisiert enthalten, enthaltend mindestens einen stickstoffhaltigen Heterocyclus, als Hilfsmittel für die Lederherstellung.

Zur Herstellung von Leder können bei der Vor-, Haupt- und Nachgerbung Polymere eingesetzt werden. Durch den Einsatz von Polymeren in der Vorgerbung kann dabei in vielen Fällen auf Cr-Verbindungen ganz oder zumindest teilweise verzichtet werden. Die Wahl der Polymeren kann die Eigenschaften des Lederendprodukts beeinflussen. Für die Wahl der Polymeren werden in der Literatur unterschiedliche Vorschläge gemacht.

Aus WO 93/17130 ist bekannt, dass sich bestimmte Maleinimidcopolymere beispielsweise in der Nachgerbung einsetzen lassen.

Zur Herstellung von Leder sind die im Stand der Technik genannten Polymere jedoch in vielen Fällen nicht optimal. Beispielsweise lassen sich die nach den bisherigen Methoden hergestellten Leder in ihrer Fülle, ihrer Narbenbeschaffenheit und den Oberflächeneigenschaften verbessern. Weiterhin ist die Verteilung der in der Nachgerbung eingesetzten Fette im Lederquerschnitt noch nicht optimal. Schließlich lässt sich auch die in der Nachgerbung erzielte Farbstärke in einigen Fällen noch verbessern.

Demgemäß wurde die eingangs definierte Verwendung von bestimmten Pfropfcopolymerisaten als Hilfsmittel für die Lederherstellung gefunden.

In einer Ausführungsform der vorliegenden Erfindung sind erfindungsgemäß als Hilfsmittel für die Lederherstellung verwendete Pfropfcopolymerisate, die im Folgenden auch als erfindungsgemäß verwendete Pfropfcopolymerisate bezeichnet werden, dadurch gekennzeichnet, dass sie mindestens ein monoethylenisch ungesättigtes Monomer, ausgewählt aus B1 und B2, einpolymerisiert enthalten, das mindestens einen stickstoffhaltigen Heterocyclus enthält.

In einer Ausführungsform der vorliegenden Erfindung sind erfindungsgemäß verwendete Pfropfcopolymerisate dadurch gekennzeichnet, dass sie mindestens zwei verschiedene monoethylenisch ungesättigte Monomere B1 und B2 einpolymerisiert enthalten, die jeweils mindestens einen stickstoffhaltigen Heterocyclus enthalten. Besonders bevorzugt enthalten die erfindungsgemäß verwendeten Pfropfcopolymerisate mindestens ein Monomer B₁ und mindestens ein Monomer B2 einpolymerisiert.

In einer Ausführungsform der vorliegenden Erfindung enthalten die erfindungsgemäß verwendeten Pfropfcopolymerisate als Monomer B1 mindestens ein cyclisches Amid der allgemeinen Formel I 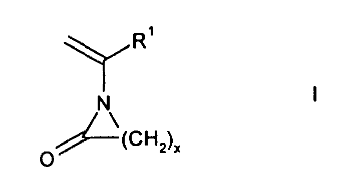 einpolymerisiert, wobei in Formel I die Variablen folgende Bedeutung haben:
- x: ist eine ganze Zahl im Bereich von 1 bis 6
- R¹: Wasserstoff oder C₁-C₄-Alkyl, wie Methyl, Ethyl, n-Propyl, iso-Propyl, n-Butyl, iso-Butyl, sec.-Butyl und tert.-Butyl.

Im Einzelnen seien als einpolymerisiertes Monomer B1 beispielsweise N-Vinylpyrrolidon, N-Vinyl-δ-valerolactam und N-Vinyl-ε-caprolactam genannt, wobei N-Vinylpyrrolidon bevorzugt ist.

In einer Ausführungsform der vorliegenden Erfindung enthalten die erfindungsgemäß verwendeten Pfropfcopolymerisate mindestens ein Monomer B2 einpolymerisiert, das einen stickstoffhaltigen Heterocyclus, ausgewählt aus der Gruppe der Pyrrole, Pyrrolidine, Pyridine, Chinoline, Isochinoline, Purine, Pyrazole, Imidazole, Triazole, Tetrazole, Indolizine, Pyridazine, Pyrimidine, Pyrazine, Indole, Isoindole, Oxazole, Oxazolidone, Oxazolidine, Morpholine, Piperazine, Piperidine, Isoxazole, Thiazole, Isothiazole, Indoxyle, Isatine, Dioxindole und Hydanthoine und deren Derivaten, z.B. Barbitursäure und Uracil und deren Derivate, enthält.

Bevorzugte Heterocyclen sind dabei Imidazole, Pyridine und Pyridin-N-oxide, wobei Imidazole besonders bevorzugt sind.

Beispiele für besonders geeignete Comonomere B2 sind N-Vinylimidazole, Alkylvinylimidazole, insbesondere Methylvinylimidazole wie 1-Vinyl-2-methylimidazol, 3-Vinylimidazol-N-oxid, 2- und 4-Vinylpyridine, 2- und 4-Vinylpyridin-N-oxide sowie betainische Derivate und Quaternisierungsprodukte dieser Monomere.

Ganz besonders bevorzugte einpolymerisierte Comonomere B2 sind N-Vinylimidazole der allgemeinen Formel II a, betainische N-Vinylimidazole der allgemeinen Formel II b, 2- und 4-Vinylpyridine der allgemeinen Formel II c und II d sowie betainische 2- und 4-Vinylpyridine der allgemeinen Formel II e und II f 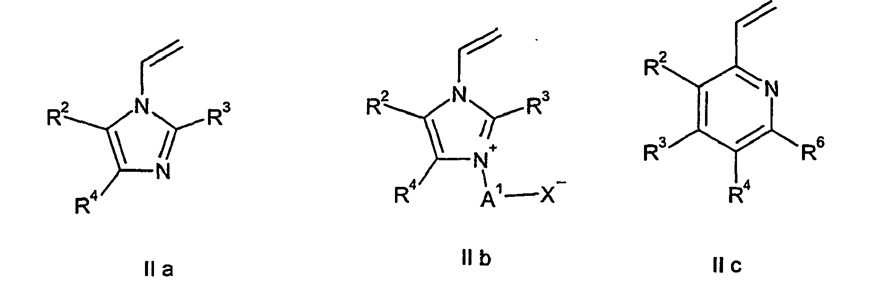 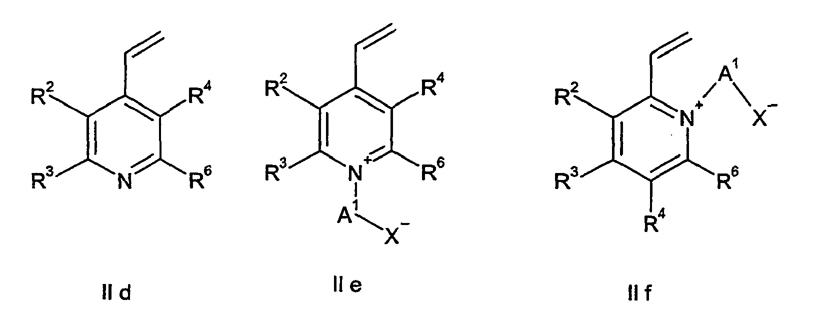 in denen die Variablen folgende Bedeutung haben:
- R², R³, R⁴, R⁶: unabhängig voneinander Wasserstoff, C₁-C₄-Alkyl wie Methyl, Ethyl, n-Propyl, iso-Propyl, n-Butyl, iso-Butyl, sec.-Butyl und tert.-Butyl; oder Phenyl, vorzugsweise Wasserstoff;
- A¹: C₁-C₂₀-Alkylen, beispielsweise -CH₂-, -CH(CH₃)-, -(CH₂)₂-, -CH₂-CH(CH₃)-, -(CH₂)₃-, -(CH₂)₄-, -(CH₂)₅- , -(CH₂)₆-, vorzugsweise C₁-C₃-Alkylen; insbesondere -CH₂, -(CH₂)₂- oder -(CH₂)₃-.
- X⁻: -SO₃⁻, -OSO₃⁻ , -COO⁻, -OPO(OH)O⁻, -OPO(OR⁵)O⁻ oder -PO(OH)O⁻;
- R⁵: C₁-C₂₄-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl.

Beispiele für insbesondere bevorzugte betainische einpolymerisierte Monomere B2 sind Monomere der Formeln II b, II e und II f, in denen die Gruppierung A¹- X⁻ für -CH₂-COO-, -(CH₂)₂-SO₃⁻ oder -(CH₂)₃-SO₃- steht und die übrigen Variablen jeweils für Wasserstoff.

Es eignen sich auch Vinylimidazole und Vinylpyridine als einpolymerisierte Monomere B2, die vor oder nach der Polymerisation quaternisiert wurden.

Die Quaternisierung kann insbesondere mit Alkylierungsmitteln wie Alkylhalogeniden, die in der Regel 1 bis 24 C-Atome im Alkylrest aufweisen, oder Dialkylsulfaten, die im allgemeinen Alkylreste mit 1 bis 10 C-Atomen enthalten, vorgenommen werden. Beispiele für geeignete Alkylierungsmittel aus diesen Gruppen sind Methylchlorid, Methylbromid, Methyliodid, Ethylchlorid, Ethylbromid, Propylchlorid, Hexylchlorid, Dodecylchlorid und Laurylchlorid sowie Dimethylsulfat und Diethylsulfat. Weitere geeignete Alkylierungsmittel sind z.B.: Benzylhalogenide, insbesondere Benzylchlorid und Benzyl-bromid; Chloressigsäure; Fluorschwefelsäuremethylester; Diazomethan; Oxoniumverbindungen wie Trimethyloxoniumtetrafluoroborat; Alkylenoxide wie Ethylenoxid, Propylenoxid und Glycidol, die in Gegenwart von Säuren zum Einsatz kommen; kationische Epichlorhydrine. Bevorzugte Quaternisierungsmittel sind Methylchlorid, Dimethylsulfat und Diethylsulfat.

Beispiele-für besonders geeignete einpolymerisierte quaternisierte Monomere B2 sind 1-Methyl-3-vinylimidazoliummethosulfat und methoclorid.

Das Gewichtsverhältnis der einpolymerisierten Monomere B1 oder B2 oder Monomere B1 und B2 und gegebenenfalls B3 beträgt in der Regel 99:1 bis 1:99, bevorzugt 90:10 bis 30:70, besonders bevorzugt 90:10 bis 50:50, ganz besonders bevorzugt 80:20 bis 50:50 und insbesondere 80:20 bis 60:40.

Die erfindungsgemäß verwendeten Pfröpfcopolymerisate können ein oder mehrere weitere Monomere B3 einpolymerisiert enthalten, beispielsweise carboxylgruppenhaltige monoethylenisch ungesättigte Monomere wie beispielsweise C₂-C₁₀-ungesättigte Mono- oder Dicarbonsäuren und deren Derivate wie Salze, Ester, Amide und Anhydride. Beispielhaft seien genannt:

Säuren und ihre Salze wie beispielsweise (Meth)-acrylsäure, Fumarsäure, Maleinsäure und die jeweiligen Alkali- oder Ammoniumsalze; Anhydride wie beispielsweise Maleinsäureanhydrid;

Ester wie beispielsweise (Meth)-acrylsäuremethylester, (Meth)-acrylsäureethylester, (Meth)-acrylsäure-n-butylester, Dimethylmaleat, Diethylmaleat, Dimethylfumarat, Diethylfumarat, Di-n-butylfumarat,

Weitere Beispiele für B3 sind Vinylacetat und Vinylpropionat sowie ethylenisch ungesättigte Verbindungen der allgemeinen Formel III a bis III d, 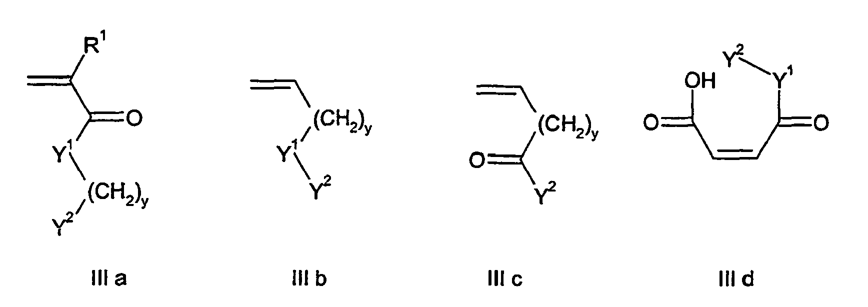 wobei die Formeln wie folgt definiert sind:
- R¹: ist wie oben definiert,
- Y¹: ist gewählt aus Sauerstoff oder NH,
- y: ist eine ganze Zahl, gewählt aus 1 oder 0,
- Y²: [A²-O]ₛ-[A³-O]ᵤ-[A⁴-O]ᵥ-R⁸
- A² bis A⁴: gleich oder verschieden und unabhängig voneinander -(CH₂)₂-, -(CH₂)₃-, -(CH₂)₄-, -CH₂-CH(CH₃)-, -CH₂-CH(CH₂-CH₃)-, -CH₂-CHOR¹⁰-CH₂-;
- R⁸: Wasserstoff, Amino-C₁-C₆-alkyl, wobei es sich um eine primäre, sekundäre oder tertiäre Aminogruppe handeln kann, beispielsweise CH₂-NH₂, -(CH₂)₂-NH₂, -CH₂-CH(CH₃)-NH₂, -CH₂-NHCH₃, -CH₂-N(CH₃)₂, -N(CH₃)₂, -NHCH₃, -N(C₂H₅)₂; C₁-C₂₄-Alkyl; R⁹-CO-, R⁹-NH-CO-;
- R⁹: C₁-C₂₄-Alkyl;
- R¹⁰: Wasserstoff, C₁-C₂₄-Alkyl, R⁹-CO-;
- s: ganze Zahlen im Bereich von 0 bis 500;
- u: gleich oder verschieden und ganze Zahlen im Bereich von jeweils 1 bis 5000;
- v: gleich oder verschieden und ganze Zahlen im Bereich von jeweils 0 bis 5000;
- w: gleich oder verschieden und ganze Zahlen im Bereich von jeweils 0 bis 5000.

C₁-C₂₄-Alkylreste in Formel III a bis III d können verzweigte oder unverzweigte C₁-C₂₄-Alkylreste sein, wobei C₁-C₁₂-Alkylreste bevorzugt und C₁-C₆-Alkylreste besonders bevorzugt sind. Als Beispiele seien Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methytpropyl, n-Heptyl, 2-Ethylhexyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl und n-Eicosyl genannt.

In einer Ausführungsform verwendet man solche Pfropfcopolymerisate, welche aufgebaut sind aus
einer polymeren Pfropfgrundlage A, die keine monoethylenisch ungesättigten Einheiten aufweist, und
polymeren Seitenketten B, gebildet aus Copolymeren von mindestens einem monoethylenisch ungesättigten Monomeren, gewählt aus B1 oder B2 oder Monomere B1 und B2 und gegebenenfalls B3, das mindestens einen stickstoffhaltigen Heterocyclus enthält, und optional weiteren Comonomeren B3.

In einer Ausführungsform verwendet man solche Pfropfcopolymerisate, welche aufgebaut sind aus
einer polymeren Pfropfgrundlage A, die keine monoethylenisch ungesättigten Einheiten aufweist, und
polymeren Seitenketten B, gebildet aus Copolymeren von mindestens zwei monoethylenisch ungesättigten Monomeren B1 oder B2 oder Monomere B1 und B2 und gegebenenfalls B3, die jeweils mindestens einen stickstoffhaltigen Heterocyclus enthalten, und optional weiteren Comonomeren B3.

Die in der im Folgenden beschriebenen Ausführungsform des erfindungsgemäßen Verfahrens verwendeten Pfropfcopolymerisate, die kammartig aufgebaut sein können, können durch ihr Verhältnis von Seitenketten B zu polymerer Pfropfgrundlage A charakterisiert werden. Der Anteil der Seitenketten B an den Pfropfcopolymerisaten ist vorteilhaft größer als 35 Gew.-%, bezogen auf das Gesamt-Pfropfcopolymerisat. Bevorzugt beträgt der Anteil 55 bis 95 Gew.-%, besonders bevorzugt 70 bis 90 Gew.-%.

Die Seitenketten B der Pfropfcopolymerisate enthalten als Monomer B1 vorzugsweise mindestens ein cyclisches Amid der allgemeinen Formel I 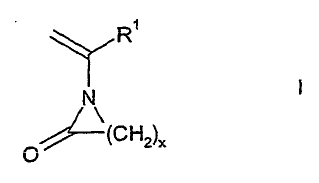 einpolymerisiert, wobei in Formel I die Variablen wie oben definiert sind.

Im einzelnen seien als einpolymerisiertes Monomer B1 beispielsweise N-Vinylpyrrolidon, N-Vinyl-δ-valerolactam und N-Vinyl-ε-caprolactam genannt, wobei N-Vinylpyrrolidon bevorzugt ist.

In einer Ausführungsform der vorliegenden Erfindung enthalten die Seitenketten B vorzugsweise mindestens ein monoethylenisch ungesättigtes Monomer B2 einpolymerisiert, das einen stickstoffhaltigen Heterocyclus, ausgewählt aus der Gruppe der Pyrrole, Pyrrolidine, Pyridine, Chinoline, Isochinoline, Purine, Pyrazole, Imidazole, Triazole, Tetrazole, Indolizine, Pyridazine, Pyrimidine, Pyrazine, Indole, Isoindole, Oxazole, Oxazolidone, Oxazolidine, Morpholine, Piperazine, Piperidine, Isoxazole, Thiazole, lsothiazole, Indoxyle, lsatine, Dioxindole und Hydanthoine und deren Derivaten, z.B. Barbitursäure und Uracil und deren Derivate, enthält.

Bevorzugte Heterocyclen sind dabei Imidazole, Pyridine und Pyridin-N-oxide, wobei Imidazole besonders bevorzugt sind.

Beispiele für besonders geeignete Comonomere B2 sind N-Vinyiimidazole, Alkylvinylimidazole, insbesondere Methylvinylimidazole wie 1-Vinyl-2-methylimidazol, 3-Vinyl imidazol-N-oxid, 2- und 4-Vinylpyridine, 2- und 4-Vinylpyridin-N-oxide sowie betainische Derivate und Quaternisierungsprodukte dieser Monomere.

Ganz besonders bevorzugte einpolymerisierte Comonomere B2 sind N-Vinylimidazole der allgemeinen Formel II a, betainische N-Vinylimidazole der allgemeinen Formel II b, 2- und 4-Vinylpyridine der allgemeinen Formel II c und II d sowie betainische 2- und 4-Vinylpyridine der allgemeinen Formel II e und II f.

Beispiele für ganz besonders bevorzugte betainische einpolymerisierte Monomere B2 sind Monomere der Formeln II b, II e und II f, in denen die Gruppierung A¹ - X⁻ für -CH₂-COO⁻, -(CH₂)₂-SO₃⁻ oder -(CH₂)₃-SO₃⁻ steht und die übrigen Variablen jeweils für Wasserstoff.

Es eignen sich auch Vinylimidazole und Vinylpyridine als einpolymerisierte Monomere B2, die vor oder nach der Polymerisation quaternisiert wurden.

Die Quaternisierung kann insbesondere wie oben beschrieben vorgenommen werden.

Beispiele für besonders geeignete einpolymerisierte quaternisierte Monomere B2 sind 1-Methyl-3-vinylimidazoliummethosulfat und -methoclorid.

Das Gewichtsverhältnis der einpolymerisierten Monomere B1 oder B2 oder Monomere B1 und B2 und gegebenenfalls B3 beträgt in der Regel 99:1 bis 1:99, bevorzugt 90:10
bis 30:70, besonders bevorzugt 90:10 bis 50:50, ganz besonders bevorzugt 80:20 bis 50:50 und insbesondere 80:20 bis 60:40.

Die erfindungsgemäß verwendeten Pfropfcopolymerisate können ein oder mehrere weitere Monomere B3 in den Seitenketten einpolymerisiert enthalten, z.B. carboxylgruppenhaltige monoethylenisch ungesättigte Monomere, beispielsweise C₂-C₁₀-ungesättigte Mono- oder Dicarbonsäuren und deren Derivate wie Salze, Ester, Anhydride und die wie oben stehend definiert sind.

Die polymere Pfropfgrundlage A der erfindungsgemäß verwendeten Pfropfcopolymerisate ist bevorzugt ein Polyether. Der Begriff "polymer" soll dabei auch oligomere Verbindungen mit umfassen.

Besonders bevorzugte polymere Pfropfgrundlagen A haben ein mittleres Molekulargewicht Mₙ von mindestens 300 g.

Besonders bevorzugte polymere Pfropfgrundlagen A weisen die allgemeine Formel IV a 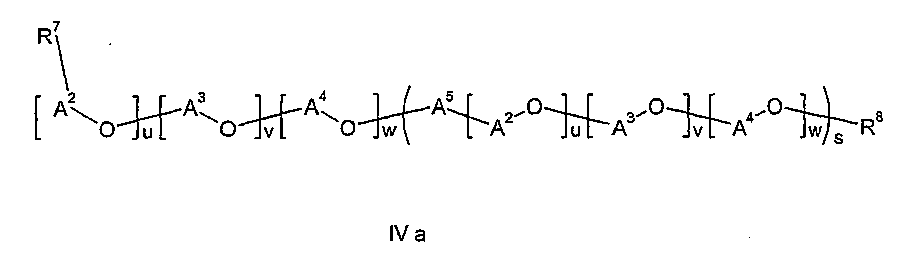 auf oder IV b 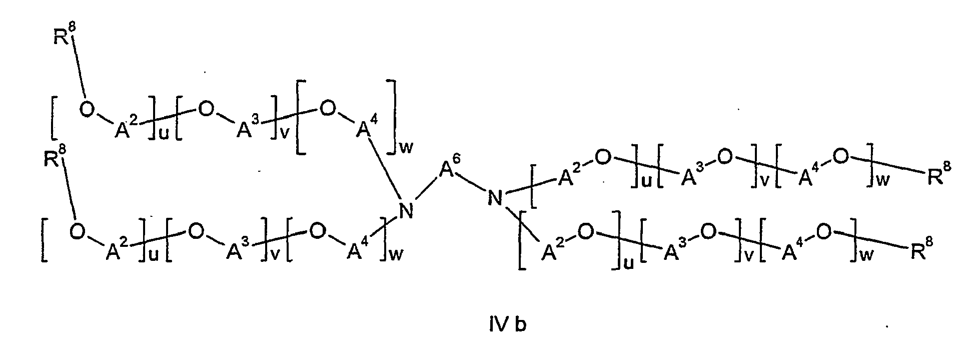 auf, in denen die Variablen folgende Bedeutung haben:
- R⁷: Hydroxy, Amino, C₁-C₂₄-Alkoxy wie beispielsweise Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy iso-Hexoxy, R⁹-COO-, R⁹-NH-COO-, Polyalkoholrest wie beispielsweise Gylcerinyl;
- A² bis A⁴: gleich oder verschieden und jeweils -(CH₂)₂-, -(CH₂)₃-, -(CH₂)₄-, -CH₂-CH(CH₃)-, -CH₂-CH(CH₂-CH₃)-, -CH₂-CHOR¹⁰-CH₂-;
- R⁸: Wasserstoff, Amino-C₁-C₆-alkyl, wobei es sich um eine primäre, sekundäre oder tertiäre Aminogruppe handeln kann, beispielsweise -CH₂-NH₂,
-(CH₂)₂-NH₂, -CH₂-CH(CH₃)-NH₂, -CH₂-NHCH₃, -CH₂-N(CH₃)₂, -N(CH₃)₂,
-NHCH₃, -N(C₂H₅)₂;
C₁-C₂₄-Alkyl;
R⁹-CO-, R⁹-NH-CO-;
- A⁵: -CO-O-, -CO-B-CO-O-, -CO-NH-B-NH-CO-O-;
- A⁶: C₁-C₂₀-Alkylen, dessen Kohlenstoffkette durch 1 bis 10 Sauerstoffatome als Etherfunktionen unterbrochen sein kann;
- B: -(CH₂)ₜ-, Arylen, beispielsweise para-Phenylen, meta-Phenylen, ortho-Phenylen, 1,8-Naphthylen, 2,7-Naphthylen, substituiert oder unsubstituiert;
- n: 1 oder, wenn R⁷ einen Polyalkoholrest bedeutet, 1 bis 8;
- t: ganze Zahlen im Bereich von 1 bis 12;
und die übrigen Variablen wie oben stehend definiert sind.

Bei polymeren Pfropfgrundlagen A der Formel IV a handelt es sich vorzugsweise um Polyether aus der Gruppe der Polyalkylenoxide auf Basis von Ethylenoxid, Propylenoxid und Butylenoxiden, Polytetrahydrofuran sowie Polyglycerin. Je nach Art der Monomerbausteine ergeben sich Polymerisate mit folgenden Struktureinheiten:
-(CH₂)₇-O-, -(CH₂)₃-O-, -(CH₂)₄-O-, -CH₂-CH(CH₃)-O-, -CH₂-CH(CH₂-CH₃)-O-, -CH₂-CHOR⁸-CH₂-O-

Geeignet sind sowohl Homopolymerisate als auch Copolymerisate als Pfropfgrundlage, wobei es sich bei den Copolymerisaten um statistische Copolymerisate oder um Blockcopolymerisate handeln kann.

Die endständigen primären Hydroxylgruppen der auf Basis von Alkylenoxiden oder Glycerin hergestellten Polyether sowie die sekundären OH-Gruppen von Polyglycerin können frei vorliegen oder auch mit C₁-C₂₄-Alkoholen verethert, mit C₁-C₂₄-Carbonsäuren verestert oder mit Isocyanaten zu Urethanen umgesetzt sein. Für diesen Zweck geeignete Alkohole sind z.B.: primäre aliphatische Alkohole, wie Methanol, Ethanol, Propanol und Butanol, primäre aromatische Alkohole, wie Phenol, lsopropylphenol, tert.-Butylphenol, Octylphenol, Nonylphenol und Naphthol, sekundäre aliphatische Alkohole, wie Isopropanol, tertiäre aliphatische Alkohole, wie tert.-Butanol und mehrwer tige Alkohole, z.B. Diole, wie Ethylenglykol, Diethylenglykol, Propylenglykol, 1,3-Propandiol und Butandiol, und Triole, wie Glycerin und Trimethylolpropan. Die Hydroxylgruppen können jedoch auch durch reduktive Aminierung mit Wasserstoff-Ammoniak-Gemischen unter Druck gegen primäre Aminogruppen ausgetauscht oder durch Cyanethylierung mit Acrylinitril und Hydrierung in Aminopropylenendgruppen umgewandelt sein. Die Umwandlung der Hydroxyl-Endgruppen kann dabei nicht nur nachträglich durch Umsetzung mit Alkoholen oder mit Alkalimetallaugen, Aminen und Hydroxylaminen erfolgen, sondern diese Verbindungen können wie Lewis-Säuren, z.B. Bortrifluorid, auch zu Beginn der Polymerisation als Starter verwendet werden. Schließlich können die Hydroxyl-Endgruppen auch durch Umsetzung mit Alkylierungsmitteln, wie Dimethylsulfat, verethert werden.

Die C₁-C₂₄-Alkylreste in Formel IV a und IV b können verzweigte oder unverzweigte C₁-C₂₄-Alkylreste sein, wobei C₁-C₁₂-Alkylreste bevorzugt und C₁-C₆-Alkylreste besonders bevorzugt sind. Als Beispiele seien Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, 2-Ethylhexyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl und n-Eicosyl genannt.

Das mittlere Molekulargewicht Mₙ der Polyether der allgemeinen Formel IV a beträgt mindestens 300 g/mol und ist in der Rege ≤ 100.000 g/mol. Es beträgt bevorzugt 500 g/mol bis 50.000 g/mol, besonders bevorzugt bis 10.000/mol g und ganz besonders bevorzugt bis 2000 g/mol. Die Polydispersität der Polyether der allgemeinen Formel IV a ist in den meisten Fällen gering, beispielsweise im Bereich von 1,1 bis 1,8.

Man kann Homo- und Copolymerisate von Ethylenoxid, Propylenoxid, Butylenoxid und Isobutylenoxid, die linear oder verzweigt sein können, als polymere Pfropfgrundlage A verwenden. Der Begriff Homopolymerisate umfasst im Rahmen der vorliegenden Erfindung auch solche Polymerisate, die außer der polymerisierten Alkylenoxideinheit noch die reaktiven Moleküle enthalten, die zur Initiierung der Polymerisation der cyclischen Ether bzw. zur Endgruppenverschließung des Polymerisats verwendet wurden.

Verzweigte Polymerisate können hergestellt werden, indem man beispielsweise an niedrigmolekulare Polyalkohole (Reste R⁷ in Formel IV a und IV b), z.B. Pentaerythrit, Glycerin und Zucker bzw. Zuckeralkohole, wie Saccharose, D-Sorbit und D-Mannit, Disaccharide, Ethylenoxid und gewünschtenfalls Propylenoxid und/oder Butylenoxide oder auch Polyglycerin anlagert.

Dabei können Polymerisate gebildet werden, bei denen mindestens eine, bevorzugt eine bis acht, besonders bevorzugt eine bis fünf der in dem Polyalkoholmolekül vorhandenen Hydroxylgruppen in Form einer Etherbindung mit dem Polyetherrest gemäß Formel IVa bzw. IVb verknüpft sein können.

Vierarmige Polymerisate können erhalten werden, indem man die Alkylenoxide an Diamine, vorzugsweise Ethylendiamin, anlagert.

Weitere verzweigte Polymerisate können hergestellt werden, indem man Alkylenoxide mit höherwertigen Aminen, z.B. Triaminen, oder insbesondere Polyethyleniminen umsetzt. Hierfür geeignete Polyethylenimine haben in der Regel mittlere Molekulargewichte Mₙ von 300 bis 20000 g, bevorzugt 500 bis 10000 g und besonders bevorzugt 500 bis 5000 g. Das Gewichtsverhältnis von Alkylenoxid zu Polyethylenimin beträgt üblicherweise im Bereich von 100:1 bis 0,1:1, vorzugsweise im Bereich von 20:1 bis 0,5:1.

Es ist auch möglich, Polyester von Polyalkylenoxiden und aliphatischen C₁-C₁₂-, bevorzugt C₁-C₆-Dicarbonsäuren oder aromatischen Dicarbonsäuren, z.B. Oxalsäure, Bernsteinsäure, Adipinsäure oder Terephthalsäure, mit mittleren Molekulargewichten Mₙ von 1500 bis 25000 g/mol als polymere Pfropfgrundlage A zu verwenden.

Es ist weiterhin möglich, anstatt IV a und IV b durch Phosgenierung hergestellte Polycarbonate von Polyalkylenoxiden oder auch Polyurethane von Polyalkylenoxiden und aliphatischen C₁-C₁₂-, bevorzugt C₁-C₆-Diisocyanaten oder aromatischen Diisocyanaten, z.B. Hexamethylendiisocyanat oder Phenylendiisocyanat, als polymere Pfropfgrundlage A zu verwenden.

Diese Polyester, Polycarbonate oder Polyurethane können bis zu 500, bevorzugt bis zu 100 Polyalkylenoxideinheiten enthalten, wobei die Polyalkylenoxideinheiten sowohl aus Homopolymerisaten als auch aus Copolymerisaten unterschiedlicher Alkylenoxide bestehen können.

Besonders bevorzugt werden Homo- und Copolymerisate von Ethylenoxid und/oder Propylenoxid als polymere Pfropfgrundlage A verwendet, die einseitig oder beidseitig endgruppenverschlossen sein können.

Ein Effekt von Polypropylenoxid und copolymeren Alkylenoxiden mit hohem Propylenoxidanteil liegt darin, dass die Pfropfung leicht erfolgt.

Ein Effekt von Polyethylenoxid und copolymeren Alkylenoxiden mit hohem Ethylenoxidanteil besteht darin, dass bei erfolgter Pfropfung und gleicher Pfropfdichte wie bei Polypropylenoxid das Gewichtsverhältnis von Seitenkette zu polymerer Pfropfgrundlage größer ist.

Die K-Werte der Pfropfcopolymerisate betragen üblicherweise 10 bis 150, bevorzugt 10 bis 80 und besonders bevorzugt 15 bis 60 (bestimmt nach H. Fikentscher, Cellulose-Chemie, Bd. 13, S. 58 bis 64 und 71 bis 74 (1932) in Wasser bzw. 3 Gew.-% wässrigen Natriumchloridlösungen bei 25°C und Polymerkonzentrationen, die je nach K-Wert-Bereich bei 0,1 Gew.-% bis 5 Gew.-% liegen). Der jeweils gewünschte K-Wert lässt sich durch die Zusammensetzung der Einsatzstoffe einstellen. Bei 100% theoretischem Pfropfgrad wird das Molekulargewicht der Produkte gegeben durch Molekulargewicht der Pfropfbasis und dem Anteil der Comonomere, die als Seitenketten abreagieren. Je mehr Moleküle man als Pfropfbasis einsetzt, desto mehr Endmoleküle hat man und umgekehrt. Die Seitenkettendichte ist durch die Startermenge und die Reaktionsbedingungen einstellbar.

Bei einem weiteren Verfahren zur Herstellung der erfindungsgemäß verwendeten Pfropfcopolymerisate werden die Monomere B1 und/oder B2 und gegebenenfalls weitere Comonomere in B3 Gegenwart der polymeren Pfropfgrundlage A radikalisch polymerisiert.

Die Polymerisation kann beispielsweise im Sinne einer Lösungspolymerisation, Polymerisation in Substanz, Emulsionspolymerisation, umgekehrten Emulsionspolymerisation, Suspensionspolymerisation, umgekehrten Suspensionspolymerisation oder Fällungspolymerisation geführt werden. Bevorzugt sind die Polymerisation in Substanz und vor allem die Lösungspolymerisation, die insbesondere in Gegenwart von Wasser durchgeführt wird.

Bei der Polymerisation in Substanz kann man so vorgehen, dass man Monomer B1 oder B2 oder die Monomere B1 und B2 sowie gegebenenfalls B3 in der polymeren Pfropfgrundlage A löst, die Mischung auf die Polymerisationstemperatur erhitzt und nach Zugabe eines Radikalstarters auspolymerisiert. Die Polymerisation kann auch halbkontinuierlich durchgeführt werden, indem man zunächst einen Teil, z.B. 10 Gew.-%, der Mischung aus polymerer Pfropfgrundlage A, Monomer B1 oder B2 oder Monomere B1 und B2 und gegebenenfalls B3 und Radikalstarter vorlegt und auf Polymerisationstemperatur erhitzt und nach dem Anspringen der Polymerisation den Rest der zu polymerisierenden Mischung nach Fortschritt der Polymerisation zugibt. Man kann jedoch auch die polymere Pfropfgrundlage A in einem Reaktor vorlegen und auf Polymerisationstemperatur erhitzen und Monomer B1 oder B2 oder Monomere B1 und B2 und gegebenenfalls B3 (getrennt oder als Mischung) und den Radikalstarter entweder auf einmal, absatzweise oder vorzugsweise kontinuierlich zufügen und polymerisieren. Die oben beschriebene Pfropfcopolymerisation kann in einem oder mehreren Lösungsmittel durchgeführt werden. Geeignete organische Lösungsmittel sind beispielsweise aliphatische und cycloaliphatische einwertige Alkohole, wie Methanol, Ethanol, n-Propanol, Isopropanol, n-Butanol, sek.-Butanol, tert.-Butanol, n-Hexanol und Cyclohexanol, mehrwertige Alkohole, z.B. Glykole, wie Ethylenglykol, Propylenglykol und Butylenglykol, und Glycerin, Alkylether mehrwertiger Alkohole, z.B. Methyl- und Ethylether der genannten zweiwertigen Alkohole, sowie Etheralkohole, wie Diethylenglykol und Triethylenglykol, sowie cyclische Ether, wie Dioxan.

Bevorzugt wird die Pfropfcopolymerisation in Wasser als Lösungsmittel durchgeführt. Hierbei sind A, B1 und/oder B2 und gegebenenfalls weitere Comonomere B3 in Abhängigkeit von der verwendeten Wassermenge mehr oder weniger gut gelöst. Das Wasser kann - teilweise oder ganz - auch im Laufe der Polymerisation zugegeben werden. Selbstverständlich können auch Mischungen von Wasser und den oben genannten organischen Lösungsmitteln zum Einsatz kommen.

Üblicherweise verwendet man 5 bis 250 Gew.-%, vorzugsweise 10 bis 150 Gew.-%, organisches Lösungsmittel, Wasser oder Gemisch aus Wasser und organischem Lösungsmittel, bezogen auf das Pfropfcopolymerisat.

Bei der Polymerisation in Wasser werden in der Regel 10 bis 70 Gew.-%, bevorzugt 20 bis 50 Gew.-% Lösungen bzw. Dispersionen der erfindungsgemäßen Pfropfcopolymerisate erhalten, die mit Hilfe verschiedener Trocknungsverfahren, z.B. Sprühtrocknung, Fluidized Sprühtrocknung, Walzentrocknung oder Gefriertrocknung, in Pulverform überführt werden können. Durch Eintragen in Wasser kann dann zum gewünschten Zeitpunkt leicht wieder eine wässrige Lösung bzw. Dispersion hergestellt werden.

Als Radikalstarter eignen sich vor allem Peroxoverbindungen, Azoverbindungen, Redoxinitiatorsysteme und reduzierende Verbindungen. Selbstverständlich kann man auch Mischungen von Radikalstartern verwenden.

Beispiele für geeignete Radikalstarter sind im einzelnen: Alkalimetallperoxodisulfate, z.B. Natriumperoxodisulfat, Ammoniumperoxodisulfat, Wasserstoffperoxid, organische Peroxide, wie Diacetylperoxid, Di-tert.-butylperoxid, Diamylperoxid, Dioctanoylperoxid, Didecanoylperoxid, Dilauroylperoxid, Dibenzoylperoxid, Bis-(o-toloyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat; Azobisisobutyronitril, Azobis(2-amidopropan)dihydrochlorid und 2,2'-Azobis(2-methylbutyronitril); Natriumsulfit, Natriumbisulfit, Natriumformaldehydsulfoxilat und Hydrazin und Kombinationen der vorgenannten Verbindungen mit Wasserstoffperoxid; Ascorbinsäure/Eisen(II)sulfat/Na₂S₂O₈, tert.-Butylhydroperoxid/Natriumdisulfit und tert.-Butylhydroperoxid/ Natriumhydroxymethansulfinat.

Bevorzugte Radikalstarter sind z.B. tert.-Butylperpivalat, tert.-Butylperoctoat, tert.-Butylper-neodecanoat, tert.-Butylperoxid, tert.-Butylhydroperoxid, Azobis(2-methylpropion-amidin)dihydrochlorid, 2,2'-Azobis(2-methylbutyronitril), Wasserstoffperoxid und Natriumperoxodisulfat, denen Redoxmetallsalze, z.B. Eisensalze, in geringen Mengen zugesetzt werden können.

Üblicherweise werden, bezogen auf die Monomere B1 oder B2 oder Monomere B1 und B2 und gegebenenfalls B3, 0,01 bis 10 Gew.-%, vorzugsweise 0,1 bis 5 Gew.-%, Radikalstarter eingesetzt.

Gewünschtenfalls können auch Polymerisationsregler zum Einsatz kommen. Geeignet sind die dem Fachmann bekannten Verbindungen, z.B. Schwefelverbindungen, wie Mercaptoethanol, 2-Ethylhexylthioglykolat, Thioglykolsäure und Dodecylmercaptan, aber auch andere Reglertypen wir z.B. Bisulfit und Hypophosphit. Wenn Polymerisationsregler verwendet werden, beträgt ihre Einsatzmenge in der Regel 0,1 bis 15 Gew.-%, bevorzugt 0,1 bis 5 Gew.-% und besonders bevorzugt 0,1 bis 2,5 Gew.-%, bezogen auf Monomere B1 oder B2 oder Monomere B1 und B2 und gegebenenfalls B3.

Die Polymerisationstemperatur liegt in der Regel bei 30 bis 200°C, bevorzugt bei 50 bis 150°C und besonders bevorzugt bei 75 bis 110°C.

Die Polymerisation wird üblicherweise unter atmosphärischem Druck durchgeführt, kann jedoch auch unter vermindertem oder erhöhtem Druck, z.B. bei 0,5 oder 5 bar, ablaufen.

Erfindungsgemäß lassen sich die oben beschriebenen Pfropfcopolymerisate als Hilfsmittel in der Lederherstellung verwenden. Besonders bevorzugt verwendet man die oben beschriebenen Pfropfcopolymerisate in der Nachgerbung.

Gegenstand der vorliegenden Erfindung ist weiterhin ein Verfahren zur Herstellung von Leder unter Verwendung von mindestens einem Lederhilfsmittel (Hilfsmittel für die Lederherstellung), enthaltend die oben beschriebenen Pfropfcopolymerisate. Als erfindungsgemäße Lederhilfsmittel können wässrige Dispersionen eingesetzt werden, die mindestens eines der oben beschriebenen Pfropfcoplymerisate enthalten, und zwar üblicherweise in einer Konzentration von 1 bis 60 Gew.-%, bevorzugt 10 bis 50 Gew.-% Weitere Bestandteile der erfindungsgemäß verwendeten Lederhilfsmittel können beispielsweise sein: Fettungsmittel, Emulgatoren, anorganische Füllstoffe, Gerbstoffe, insbesondere Harzgerbstoffe, Sulfongerbstoffe oder Vegetabilgerbstoffe.

Ausführungsformen des erfindungsgemäßen Verfahrens sind Gerbverfahren, insbesondere Nachgerbverfahren, im Folgenden auch als erfindungsgemäßes Nachgerbverfahren bezeichnet.

Das erfindungsgemäße Nachgerbverfahren geht aus von nach an sich bekannten Methoden vorbehandelten Häuten von Tieren wie beispielsweise Rindern, Schweinen, Ziegen oder Hirschen, den sogenannten Blößen. Dabei ist es für das erfindungsgemäßen Nachgerbverfahren nicht wesentlich, ob die Tiere beispielsweise durch Schlachten getötet wurden oder aber an natürlichen Ursachen verendet sind. Zu den konventionellen Methoden der Vorbehandlung gehören das beispielsweise das Äschern, Entkälken, Beizen und Pickeln sowie mechanische Arbeitsschritte, beispielsweise die Entfleischung der Häute.

Außerdem werden die wie oben beschrieben vorbehandelten Häute vor Beginn des erfindungsgemäßen Nachgerbverfahrens bereits mit dem Fachmann bekannten gerbend wirkenden Substanzen behandelt, beispielsweise mit Chromgerbstoffen, mit mineralischen Gerbstoffen wie Aluminium- oder Titanverbindungen, mit Polymergerbstoffen, mit Syntanen oder mit Vegetabilgerbstoffen

Das erfindungsgemäße Nachgerbverfahren übt man im Allgemeinen so aus, dass man ein oder mehrere erfindungsgemäße Gerbmittel in einer Portion oder in mehreren Portionen unmittelbar vor oder aber während der Nachgerbung zusetzt. Das erfindungsgemäße Nachgerbverfahren wird vorzugsweise bei einem pH-Wert von 4 bis 6 durchgeführt, wobei man beobachtet, dass der pH-Wert während der Durchführung des erfindungsgemäßen Nachgerbverfahrens um etwa 0,3 bis drei Einheiten sinken kann. Man kann den pH-Wert durch Zugabe absäuernder Mittel um etwa 0,3 bis drei Einheiten senken.

Das erfindungsgemäße Nachgerbverfahren führt man im Allgemeinen bei Temperaturen im Bereich von 5 bis 60°C, bevorzugt 20 bis 50°C durch. Bewährt hat sich eine Dauer von beispielsweise 10 Minuten bis 12 Stunden, bevorzugt sind eine bis drei Stunden. Das erfindungsgemäße Nachgerbverfahren kann man in beliebigen gerbereiüblichen Gefäßen durchführen, beispielsweise durch Walken in Fässern oder in gedrehten Trommeln.

In einer Ausführungsform des erfindungsgemäßen Nachgerbverfahrens setzt man die oben beschriebenen Pfropfcopolymerisate zusammen mit einem oder mehreren herkömmlichen Gerbstoffen ein, beispielsweise mit Chromgerbstoffen, mineralischen Gerbstoffen, Aldehyden, Syntanen, Harzgerbstoffen, Polymergerbstoffen oder vegetabilen Gerbstoffen, wie sie beispielsweise beschrieben sind in *Ullmann's Encyclopedia of Industrial Chemistry,* Band A15, Seite 259 bis 282 und insbesondere Seite 268 ff., 5. Auflage, (**1990**), Verlag Chemie Weinheim. Das Gewichtsverhältnis oben beschriebenes Pfropfcopolymerisat: herkömmlicher Gerbstoff bzw. Summe der herkömmlichen Gerbstoffe beträgt zweckmäßig von 0,01 : 1 bis 100 : 1. In einer vorteilhaften Variante des erfindungsgemäßen Verfahrens setzt man nur wenige ppm der herkömmlichen Gerbmittel den oben beschriebenen Pfropfcopolymerisaten zu. Besonders vorteilhaft ist es jedoch, auf die Beimischung herkömmlicher Gerbstoffe ganz zu verzichten.

Die genannten Propfcopolymerisate werden üblicherweise in Form von wässrigen Lösungen oder wässrigen Dispersionen in Mengen von 0,5 bis 60 Gew.-%, vorzugsweise 1 bis 10 Gew.-% Feststoff, bezogen auf das Falzgewicht, eingesetzt.

In einer Variante des erfindungsgemäßen Nachgerbverfahrens setzt man oben beschriebene Pfropfcolymerisate in einer Portion oder in mehreren Portionen zu.

In einer Ausführungsform der vorliegenden Erfindung setzt man zur Ausübung des erfindungsgemäßen Nachgerbverfahrens dem Fachmann an sich bekannte Lederfarbstoffe in gerbereitechnisch üblichen Mengen zu.

In einer Ausführungsform der vorliegenden Erfindung setzt man zur Ausübung des erfindungsgemäßen Nachgerbverfahrens dem Fachmann an sich bekannte Detergenzien und/oder Netzmittel in gerbereitechnisch üblichen Mengen zu.

In einer Ausführungsform der vorliegenden Erfindung setzt man zur Ausübung des erfindungsgemäßen Nachgerbverfahrens dem Fachmann an sich bekannte Mittel in gerbereitechnisch üblichen Mengen ein, beispielsweise Fettlicker, Fettungsmittel auf Acrylat- und/oder Methacrylatbasis, Nachgerbstoffe auf Basis von Harz- und Vegetabilgerbstoffen, Füllstoffe, Lederfarbstoffe und Emulgatoren.

Das erfindungsgemäße Nachgerbverfahren kann man unter ansonsten üblichen Bedingungen durchführen. Man wählt zweckmäßig einen oder mehrere, d.h. beispielsweise 2 bis 6, Einwirkschritte und kann zwischen den Einwirkschritten mit Wasser spülen.

Ein weiterer Aspekt der vorliegenden Erfindung sind Leder, hergestellt unter Verwendung der erfindungsgemäßen Hilfsmittel für die Lederherstellung. Die erfindungsgemäß hergestellten Leder enthalten die oben beschriebenen Pfropfcopolymerisate. Die erfindungsgemäßen Leder zeichnen sich durch eine insgesamt vorteilhafte Qualität aus, beispielsweise sind sie besonders festnarbig. Außerdem zeigen sie eine besonders gute egalisierende und farbvertiefende Wirkung, was zu besonders brillant gefärbten Ledern führt. Die erfindungsgemäßen Leder enthalten die oben beschriebenen Pfropfcopolymerisate besonders gleichmäßig über den Querschnitt verteilt.

Ein weiterer Aspekt der vorliegenden Erfindung ist die Verwendung der erfindungsgemäßen Leder zur Herstellung von Bekleidungsstücken, Möbeln oder Autoteilen. Unter Bekleidungsstücke sind im Sinne der vorliegenden Erfindung beispielsweise Jacken, Schuhe, Handschuhe, Hosen, Schuhe, Gürtel oder Hosenträger zu nennen. Unter Möbeln sind im Zusammenhang mit der vorliegenden Erfindung alle solchen Möbel zu nennen, die Bestandteile aus Leder enthalten. Beispielhaft seien Sitzmöbel genannt wie etwa Sessel, Stühle, Sofas. Unter Autoteilen seien beispielhaft Autositze genannt.

Ein weiterer Aspekt der vorliegenden Erfindung sind Bekleidungsstücke, enthaltend die oder hergestellt aus erfindungsgemäßen Ledern. Ein weiterer Aspekt der vorliegenden Erfindung sind Möbel, enthaltend die oder hergestellt aus erfindungsgemäßen Ledern. Ein weiterer Aspekt der vorliegenden Erfindung sind Autoteile, enthaltend die oder hergestellt aus erfindungsgemäßen Ledern.

Die Erfindung wird durch Arbeitsbeispiele erläutert.

### Beispiele

### 1. Synthese von erfindungsgemäß verwendeten Pfropfcopolymerisaten

### 1.1. Synthese von Pfropfcopolymerisat 1 ("P1")

In einem Reaktor mit Stickstoffzuführung, Rückflusskühler, Rühr- und Dosiervorrichtung wurden 10 g Polyethylenglykol mit einem mittleren Molekulargewicht M_{w} von 600 g/mol (Pluriol ®E, BASF Aktiengesellschaft) und 56,2 g Wasser unter Stickstoffzufuhr auf ca. 85°C Innentemperatur erhitzt. Dann wurde eine Mischung von 27,5 g N-Vinylpyrrolidon und 12,5 g N-Vinylimidazol kontinuierlich innerhalb von 3¼ Stunden zugegeben. Gleichzeitig mit dieser Mischung wurden kontinuierlich innerhalb von 3¼ Stunden 0,8 g 2,2'-Azobis(2-methylpropionamidin)dihydrochlorid (V50®, Fa. Wako Chemicals) zugegeben. Nach Beendigung der Zugabe wurde auf 60°C abgekühlt. Nach Erreichen dieser Temperatur wurden 0,3 g tert.-Butylhydroperoxid in 1,72 ml Wasser zugegeben. Anschließend wurden 0,2 g Na₂S₂O₅ in 6,26 ml Wasser zugefügt. Es wurde eine klare, leicht gelbe Polymerlösung erhalten. Der Feststoffanteil betrug 42 Gew.-%.

Der K-Wert wurde nach H. Fikentscher, Cellulose-Chemie Bd. 13, S. 58-64 und 71-74 bei 25°C in 3 Gew.-% wässriger NaCl-Lösung bestimmt und betrug 40.

### 1.2. Synthese von Pfropfcopolymerisat 2 (_{"}P2")

In einem Reaktor mit Stickstoffzuführung, Rückflusskühler, Rühr- und Dosiervorrichtung wurden 120 g Polyethylenglykol mit einem mittleren Molekulargewicht Mₙ von 9000 g/mol und 120 g Wasser unter Stickstoffzufuhr auf ca. 80°C Innentemperatur erhitzt. Dann wurde mit der Zugabe einer Mischung von 280 g N-Vinylpyrrolidon und 2,8 g Mercaptoethanol begonnen. Dazu wurden zunächst 5 Gew.-% der Mischung auf einmal und nach 15 Minuten der Rest über einen Zeitraum von 6 Stunden kontinuierlich zugegeben. Gleichzeitig mit der ersten Zugabe der Mischung wurde mit der kontinuierlichen Zugabe einer Lösung von 3,5 g tert.-Butylperpivalat in 60 g Isopropanol begonnen und die Zugabe über einen Zeitraum von 7 Stunden durchgeführt. Die Temperatur wurde bei 80°C gehalten. Anschließend wurden weitere 1,4 g tert.-Butylper pivalat in 8 g Isopropanol zugegeben und danach weitere 2 Stunden bei 80°C gerührt.

Anschließend wurde auf 100°C erhitzt und über 1 Stunde eine Wasserdampfdestillation durchgeführt.

Man erhielt eine Lösung von Pfropfcopolymer 2 mit einem Feststoffgehalt von 47,7 Gew.-% und einem wie oben bestimmten K-Wert von 27,7.

### 2. Anwendungstechnische Prüfung

Allgemeine Bemerkung:

Bei Polymer V 1 handelte es sich um Acrylsäure-Acrylamid-Copolymer mit einem K-Wert nach Fikentscher von 70, Comonomerverhältnis in mol-%: (Acrylsäure:Acrylamid) 90:10.

Bei Polymer V2 handelt es sich um Acrylsäure-Acrylamid-Copolymer Comonomerverhältnis in mol%: (Acrylsäure:Acrylamid) 85:15 (Acrylsäure/Acrylamid) und einem K-Wert nach Fikentscher von 25.

### 2.1. Herstellung von Schuhoberleder

Zwei handelsübliche Rinder-Wetblue (Fa. Packer, USA) wurden auf eine Stärke von 1,8-2,0 mm gefalzt und in acht Streifen zu je ca. 1000 g geschnitten. Anschließend wurden die Streifen in einem Fass (50 l) und einer Flottenlänge von 200 Gew.-% im Abstand von 10 Minuten mit 2 Gew.-% Natriumformiat und 0,4 Gew.-% NaHCO₃ sowie 1 Gew.-% eines Naphthalinsulfonsäure-Formaldehyd-Kondensationsprodukts, hergestellt nach US 5,186,846, Beispiel "Dispergiermittel 1", versetzt. Nach 90 Minuten wurde die Flotte abgelassen. Die Streifen wurden dann auf separate Walk-Fässer verteilt.

Zusammen mit 100 Gew.-% Wasser wurden die Fässer 1 bis 4 bei 25-35°C mit je 1 Gew.-% einer 50 Gew.-% (Feststoffgehalt) wässrigen Lösung von Farbstoffen dosiert, deren Feststoffe wie folgt zusammen gesetzt waren:
70 Gewichtsteile Farbstoff aus EP-B 0 970 148, Beispiel 2.18,
30 Gewichtsteile Acid Brown 75 (Eisenkomplex), Colour Index 1.7.16;
und 10 Minuten im Fass gewalkt.

Entsprechend wurden die Gerbfässer 5 bis 8 mit je 100 Gew.-% Wasser und mit je 1 Gew.% einer 50 Gew.-% einer wässrigen Lösung des Farbstoffs aus DE-A 197 40 473, Beispiel 4.3 beschickt.

Anschließend wurden wie in Tabelle 1 angegeben je 4 Gew.-% Nachgerbstof gemäß Tabelle 1, gefolgt von 4 Gew.-% Sulfongerbstoffs aus Beispiel K1 von EP-B 0 459 168, und 2 % Harzgerbstoff Relugan® DLF, beide kommerziell erhältlich bei BASF Aktiengesellschaft. Danach wurden die Streifen 45 Minuten bei 15 Umdrehungen/min im Fass gewalkt. Danach wurden 3 Gew.-% Vegetabilgerbstoff Mimosa® zugesetzt. Nach 30 Minuten wurden weitere 2 Gew.-% des jeweiligen Farbstoffs nachdosiert.

Anschließend wurde mit Ameisensäure auf einen pH-Wert von 3,6-3,8 abgesäuert. Nach 20 Minuten wurden die Flotten durch ein optisches Verfahren bzgl. der Auszehrung bewertet und abgelassen. Die Leder wurden danach mit 200 Gew.-% Wasser gewaschen. Zuletzt wurden in 100 % Wasser bei 50 °C 5 Gew.-% Lipodermlicker® CMG und 2 Gew.-% Lipodermlicker® PN dosiert. Nach einer Walkzeit von 45 Minuten wird mit 1 % Gew.-% Ameisensäure abgesäuert.

Die gewaschenen Leder wurden getrocknet, gestollt und nach den in Tabelle 3 festgelegten Prüfkriterien bewertet. Die Bewertung erfolgte nach einem Notensystem von 1 (sehr gut) bis 5 (mangelhaft).

**Tabelle 1 Anwendungstechnische Eigenschaften der erfindungsgemäßen Leder 2.1.3, 2.1.4, und 2.1.7 2.1.8 sowie der Vergleichsleder V 2.1.1, V 2.1.2, und V2.1.5, V2.1.6.**

| Versuch Nr. | Fass | Nach gerbstoff | Ledereigenschaften | | | | | | sonstiges |
|---|---|---|---|---|---|---|---|---|---|
| | | | Fülle | Weich heit | Farb-Stärke (Färbung) | Durchfärbung (Schnitt) | Egalität Färbung | Narbenfestigkeit | Flottenauszehrung |
| V2.1.1 | 1 | V1 | 3 | 2 | 3 | 4 | 3 | 3,5 | 4 |
| V2.1.2 | 2 | V2 | 2 | 3 | 2 | 3 | 2,5 | 2 | 3 |
| 2.1.3 | 3 | P1 | 1,5 | 2 | 2 | 2 | 2 | 2 | 2,5 |
| 2.1.4 | 4 | P2 | 2,5 | 1,5 | 1 | 2 | 1,5 | 2,5 | 2 |
| V2.1.5 | 5 | V1 | 2,5 | 2 | 3,5 | 3 | 3,5 | 4 | 4 |
| V2.1.6 | 6 | V2 | 2 | 2,5 | 2,5 | 2 | 2 | 2,5 | 2,5 |
| 2.1.7 | 7 | P1 | 2 | 2 | 2 | 1,5 | 1,5 | 2,5 | 1,5 |
| 2.1.8 | 8 | P2 | 2 | 2,5 | 1,5 | 1,5 | 1 | 2 | 2 |

### 1.2 Chrom-freie Herstellung von Möbelleder

Die Haut eines Süddeutschen Rindes wurde mit (bezogen auf die Pickelblöße) 1,25 Gew.-% Glutardialdehyd und 3 Gew.-% des Sulfongerbstoffs aus EP-B 0 459 168, Beispiel K1 in ein wet-white-Halbzeug überführt. Nach der Vorgerbung lag der pH-Wert bei 3,9. Die Halbzeuge wurden nach dem Abwelken auf eine Stärke von 1,2 mm gefalzt und in Streifen zu je ca. 350 g geschnitten.

In separaten Fässern wurden die Streifen mit 100 Gew.-% Wasser, 6 Gew.-% des Sulfongerbstoffs aus EP-B 0 459 168, Beispiel K1 (BASF Aktiengesellschaft), 4 Gew.-% des Vegetabilgerbstoffs Tara® (BASF Aktiengesellschaft), Harzgerbstoff 2,5 % Relugan S® (BASF Aktiengesellschaft) sowie 1,5 Gew.-% Farbstoff über 60 Minuten bei 25°C-30°C im Fass bei 10 Umdrehungen/min im Fass gewalkt.

Es kamen folgende Farbstoffe zum Einsatz.

In den Fässern 1 bis 4 wurde Farbstoff nach Beispiel 5.20 aus WO 98/41581 eingesetzt;
in den Fässern 5 bis 8 wurde Farbstoff nach Beispiel 4.18 aus EP-B1 0 970 148 eingesetzt.

Anschließend wurde mit Ameisensäure auf einen pH-Wert 3,6 gestellt und nach 20 Minuten die Flotte abgelassen.

In die frische Flotte (100 Gew.-%) dosierte man je 5 Gew.-% Nachgerbstoff gemäß Tabelle 2, gefolgt von je 6 Gew.-% des handelsüblichen Fettungsmittels Lipodermlicker® CMG der BASF Aktiengesellschaft, 1 Gew.-% Lipamin® OK und weitere 1,5 Gew.-% des jeweiligen Farbstoffs. Nach einer Walkzeit von weiteren 60 Minuten wurde mit Ameisensäure ein pH-Wert von 3,2 eingestellt, Proben von der Flotte gezogen und die Flotte abgelassen. Die Leder wurden zweimal mit je 100 % Wasser gewaschen, über Nacht feucht gelagert und nach dem Abwalken auf Spannrahmen bei 50°C getrocknet. Nach dem Stollen werden die Leder wie unten stehend beurteilt.

Die Bewertung erfolgte nach einem Notensystem wie in der Schule von 1 (sehr gut) bis 6 (ungenügend). Die Bewertung der Flottenauszehrung erfolgte visuell nach den Kriterien Restfarbstoff (Extinktion) und Trübung.

**Tabelle 2 Anwendungstechnische Eigenschaften der erfindungsgemäßen Leder 2.2.3, 2.2.4, und 2.2.7, 2.2.8 sowie der Vergleichsleder V 2.2.1, V 2.2.2, und V2.2.5, V2.2.6.**

| Versuch Nr. | Fass | Nach gerbstoff | Ledereigenschaften | | | | | | Sonstiges |
|---|---|---|---|---|---|---|---|---|---|
| | | | Fülle | Weich heit | Narben-Festigkeit | Farbstärke (Färbung) | Egalität Färbung | Durchfärbung (Schnitt) | Flottenauszehrung |
| V2.2.1 | 1 | V1 | 4 | 2,5 | 4 | 3 | 3 | 4 | 4 |
| V2.2.2 | 2 | V2 | 3 | 4 | 2 | 2 | 3 | 2,5 | 3 |
| 2.2.3 | 3 | P1 | 3 | 3 | 2 | 1 | 2 | 1,5 | 2 |
| 2.2.4 | 4 | P2 | 2,5 | 2 | 2,5 | 1 | 1,5 | 2 | 2 |
| V2.2.5 | 5 | V1 | 3 | 3 | 4 | 3,5 | 4 | 3 | 4 |
| V2.2.6 | 6 | V2 | 3 | 4,5 | 2,5 | 2 | 3 | 2 | 2,5 |
| 2.2.7 | 7 | P1 | 2 | 3,5 | 2 | 1 | 1,5 | 1,5 | 1,5 |
| 2.2.8 | 8 | P2 | 2 | 2,5 | 2 | 1,5 | 1 | 1,5 | 2 |

Die erfindungsgemäß hergestellten Möbelleder wiesen hervorragende Fülle und Narbenfestigkeit mit einer ausgezeichneten Farbstoffdispergierung und Fixierung auf. Weiterhin wurde beobachtet, dass durch das erfindungsgemäße Nachgerbverfahren Gerbereihilfsmittel im Leder gleichmäßiger verteilt wurden und die sogenannte Auszehrung verbessert wurde, das Angebot an Gerbereihilfsstoffen insbesondere der Farbstoffe wurde also besser genutzt. Zudem konnte die Abwasserbelastung entsprechend gesenkt werden.

## Patentansprüche

1. Verwendung von Pfropfcopolymerisaten, die mindestens ein monoethylenisch ungesättigtes Monomer einpolymerisiert enthalten, das mindestens einen stickstoffhaltigen Heterocyclus enthält, als Hilfsmittel für die Lederherstellung.

2. Verwendung nach Anspruch 1, **dadurch gekennzeichnet, dass** die Pfropfcopolymerisate mindestens zwei verschiedene Monomere einpolymerisiert enthalten, die jeweils mindestens einen stickstoffhaltigen Heterocyclus enthalten.

3. Verwendung nach Anspruch 1 oder 2, **dadurch gekennzeichnet, dass** die Pfropfcopolymerisate mindestens ein Monomer B1 und ein Monomer B2 einpolymerisiert enthalten.

4. Verwendung nach einem der Ansprüche 1 bis 3, **dadurch gekennzeichnet**, das mindestens ein Pfropfcopolymerisat aufgebaut ist aus
einer polymeren Pfropfgrundlage A, die keine monoethylenisch ungesättigten Einheiten aufweist, und
polymeren Seitenketten B, gebildet aus Copolymeren von mindestens einem monoethylenisch ungesättigten Monomeren, ausgewählt aus B1 und B2 oder Monomere B1 und B2 und gegebenenfalls B3, die jeweils mindestens einen stickstoffhaltigen Heterocyclus enthalten, und optional weiteren Comonomeren B3.

5. Verwendung nach Anspruch 3 oder 4, **dadurch gekennzeichnet, dass** der Anteil der Seitenketten B am Pfropfcopolymerisat größer ist als 35 Gew.-%.

6. Verwendung nach einem der Ansprüche 3 bis 5, **dadurch gekennzeichnet, dass** es sich bei der polymeren Pfropfgrundlage A um einen Polyether handelt.

7. Verfahren zur Herstellung von Leder unter Verwendung von mindestens einem Hilfsmittel für die Lederherstellung, enthaltend mindestens ein Pfropfcopolymerisat, welches mindestens zwei monoethylenisch ungesättigte Monomere einpolymerisiert enthält, enthaltend mindestens einen stickstoffhaltigen Heterocyclus.

8. Verfahren nach Anspruch 7, **dadurch gekennzeichnet, dass** die Pfropfcopolymerisate mindestens ein Monomer B1 und mindestens ein Monomer B2 einpolymerisiert enthalten.

9. Leder, hergestellt nach einem Verfahren Anspruch 7 oder 8.

## Claims

1. The use of graft copolymers which comprise at least one monoethylenically unsaturated monomer which is incorporated in the form of polymerized units and comprises at least one nitrogen-containing heterocycle, as an assistant for leather production.

2. The use according to claim 1, wherein the graft copolymers comprise at least two different monomers which are incorporated in the form of polymerized units and in each case comprise at least one nitrogen-containing heterocycle.

3. The use according to claim 1 or 2, wherein the graft copolymers comprise at least one monomer B1 and one monomer B2 incorporated in the form of polymerized units.

4. The use according to any of claims 1 to 3, wherein at least one graft copolymer is composed of
a polymeric grafting base A which has no monoethylenically unsaturated units, and
polymeric side chains B formed from copolymers of at least one monoethylenically unsaturated monomer selected from B1 and B2 or monomers B1 and B2 and, if required, B3, which in each case comprise at least one nitrogen-containing heterocycle, and optionally further comonomers B3.

5. The use according to claim 3 or 4, wherein the amount of the side chains B on the graft copolymer is greater than 35% by weight.

6. The use according to any of claims 3 to 5, wherein the polymeric grafting base A is a polyether.

7. A process for the production of leather using at least one assistant for leather production comprising at least one graft copolymer which comprises at least two monoethylenically unsaturated monomers incorporated in the form of polymerized units, comprising at least one nitrogen-containing heterocycle.

8. The process according to claim 7, wherein the graft copolymers comprise at least one monomer B1 and at least one monomer B2 incorporated in the form of polymerized units.

9. A leather produced according to a process claim 7 or 8.

## Revendications

1. Utilisation de copolymères greffés, qui contiennent à l'état copolymérisé au moins un monomère monoéthyléniquement insaturé qui contient au moins un hétérocycle azoté, comme adjuvant pour la fabrication de cuir.

2. Utilisation suivant la revendication 1, **caractérisée en ce que** les copolymères greffés contiennent à l'état copolymérisé au moins deux monomères différents qui contiennent chacun au moins un hétérocycle azoté.

3. Utilisation suivant la revendication 1 ou 2, **caractérisée en ce que** les copolymères greffés contiennent à l'état copolymérisé au moins un monomère B1 et un monomère B2.

4. Utilisation suivant l'une des revendications 1 à 3, **caractérisée en ce qu'**au moins un copolymère greffé est constitué
d'une base de greffage polymère A, qui ne présente pas d'unités monoéthyléniquement insaturées, et
de chaînes latérales polymères B, formées à base de copolymères d'au moins un monomère monoéthyléniquement insaturé choisi parmi B1 et B2 ou de monomères B1 et B2 et éventuellement B3 qui contiennent chacun au moins un hétérocycle azoté, et éventuellement d'autres comonomères B3.

5. Utilisation suivant la revendication 3 ou 4, **caractérisée en ce que** la fraction des chaînes latérales B sur le copolymère greffé est supérieure à 35 % en poids.

6. Utilisation suivant l'une des revendications 3 à 5, **caractérisée en ce que**, en ce qui concerne la base de greffage polymère A, il s'agit d'un polyéther.

7. Procédé de préparation de cuir par utilisation d'au moins un adjuvant pour la fabrication de cuir, contenant au moins un copolymère greffé qui contient, à l'état copolymérisé, au moins deux monomères monoéthyléniquement insaturés, comportant au moins un hétérocycle azoté.

8. Procédé suivant la revendication 7, **caractérisé en ce que** les copolymères greffés contiennent à l'état copolymérisé au moins un monomère B1 et au moins un monomère B2.

9. Cuir préparé suivant un procédé de la revendication 7 ou 8.
